Europäisches Patentamt

European Patent Office

Office européen des brevets

(19)

(11) Veröffentlichungsnummer: **0 042 144**
**B1**

(12) **EUROPÄISCHE PATENTSCHRIFT**

(45) Veröffentlichungstag der Patentschrift:
16.05.84

(21) Anmeldenummer: 81104495.7

(22) Anmeldetag: 11.06.81

(51) Int. Cl.³: **H 04 H 3/00**, H 04 B 7/01

(54) Verfahren und Anordnung zum zeitgleichen Aussenden von Nachrichten über mehrere Gleichwellensender.

(30) Priorität: 14.06.80 DE 3022425

(43) Veröffentlichungstag der Anmeldung:
23.12.81 Patentblatt 81/51

(45) Bekanntmachung des Hinweises auf die Patenterteilung:
16.05.84 Patentblatt 84/20

(84) Benannte Vertragsstaaten:
AT CH DE GB LI NL

(56) Entgegenhaltungen:
DE - A - 2 645 901
DE - A - 2 812 774

IEEE TRANSACTIONS ON VEHICULAR TECHNOLOGY,
Band VT-28, Nr. 2, Mai 1979, New York, US, G.D. GRAY:
"The Simulcasting Technique: An Approach to
Total-Area Radio Coverage", Seiten 117-125
WIRELESS WORLD; Band 86, Nr. 1534 Juni/Juli 1980
Haywards Heath, GB, W.M. PANNEL: "Extending mobile
radio coverage", Seiten 79-82

(73) Patentinhaber: Licentia Patent-Verwaltungs-GmbH,
Theodor-Stern-Kai 1, D-6000 Frankfurt/Main 70 (DE)

(72) Erfinder: Logemann, Jörg, Ing.-grad., Alpenstrasse 21,
D-7904 Erbach (DE)

(74) Vertreter: Schickle, Gerhard, Dipl.-Ing. et al, Licentia
Patent-Verwaltungs-GmbH Theodor-Stern-Kai 1,
D-6000 Frankfurt/Main 70 (DE)

## Verfahren und Anordnung zum zeitgleichen Aussenden von Nachrichten über mehrere Gleichwellensender

Die Erfindung betrifft ein Verfahren und eine vorteilhafte Anordnung zur Durchführung des Verfahrens nach dem Oberbegriff des Anspruchs 1 bzw. 6.

Ein solches Verfahren ist aus IEEE TRANSACTIONS ON VEHICULAR TECHNOLOGY, Band VT-28, Nr. 2, Mai 1979, S. 117—125, bekannt.

Für die einwandfreie Funktion eines Gleichwellensendernetzes ist unter anderem die gleichzeitige und phasenrichtige Aussendung der Information Bedingung. Die Sender erhalten die Nachrichten von einer Zentrale über unterschiedliche Wege, wie Drahtleitungen oder Funkzubringer. Dabei erhalten die Nachrichten unterschiedliche Zeitverzögerungen. Diese werden beim derzeitigen Stand der Technik für jeden Weg ermittelt und zu deren Ausgleich Laufzeitnachbildungen fest eingebaut. Bei Änderung der Laufzeit auch nur eines Weges, z. B. durch Leitungsumschaltungen, muß das gesamte System entsprechend korrigiert werden. Zum vollständigen Entzerren müssen folgende Kriterien gemessen und korrigiert werden:

1. absolute Amplitude (Verstärkung)
2. Frequenzgang der Amplitude
3. absolute Laufzeit
4. Gruppenlaufzeit und Phasenlage.

Eine besondere Schwierigkeit stellt das Messen der Punkte 3. und 4. dar. Beim aus der eingangs genannten Druckschrift bekannten Verfahren sendet die Zentrale zur Ermittlung der Laufzeiten und zum Phasenabgleich Schwingungspakete an die Nebenstellen (Remote Base). Anstelle von Leitungen werden vorzugsweise fest installierte Mikrowellenfunkzubringer verwendet. Die Schwingungspakete werden von den Gleichwellensendern ausgesendet und von einem Kontrollempfänger (Phasing & Monitor Receiver) empfangen. Dieser muß an einem solchen Ort installiert sein, daß er die Sendungen aller Gleichwellensender empfangen kann; er ist über Leitungen mit der Zentrale verbunden, wo ein Vergleich der empfangenen mit den ausgesendeten Schwingungspaketen stattfindet. Entsprechend dem Vergleichsergebnis werden die Laufzeitnachbildungen eingestellt. Der Kontrollempfänger bleibt fest installiert und gestattet eine regelmäßige Kontrolle der Parameter des Gleichwellensendernetzes.

Das beschriebene Verfahren ist nur bei kleinen Flächennetzen sinnvoll einsetzbar. Bei ausgedehnten Flächennetzen oder Linienfunknetzen werden zusätzliche Kontrollempfänger mit zusätzlichen kostspieligen Verbindungen zur Zentrale notwendig.

Aus der DE-A-28 12 774 ist es bekannt, die Sendungen eines Zeitzeichensenders zur Synchronisierung von Funksendern und -empfängern einzusetzen.

Insbesondere bei Gleichwellensendernetzen mit relativ geringem Verkehrsaufkommen ist es erwünscht, teure Dauerverbindungen zwischen Zentrale und Nebenstellen zu vermeiden und die Verbindungen nur bei Bedarf herzustellen, z. B. durch das Anwählen von Leitungen des öffentlichen Telefonnetzes.

Aufgabe der Erfindung ist es daher, für Gleichwellensendernetze der genannten Art ein Verfahren zum automatischen Laufzeitausgleich anzugeben, welches sich sofort auf eine neue Leitung einstellt. Das Verfahren soll mit geringem Aufwand bei beliebig komplizierten Netzen einsetzbar sein.

Die Lösung der Aufgabe ist im kennzeichnenden Teil des Patentanspruches 1 beschrieben. Die weiteren Ansprüche beinhalten vorteilhafte Weiterbildungen der Erfindung sowie eine vorteilhafte Anordnung zur Durchführung des erfindungsgemäßen Verfahrens.

Die Erfindung wird im folgenden anhand der Figuren näher erläutert.

Fig. 1 zeigt eine vorteilhafte Anordnung zur Durchführung des erfindungsgemäßen Verfahrens. Es sind ein Sendernetz mit einer Zentrale Z und zwei Nebenstellen N mit Gleichwellensendern GWS dargestellt. Die Netze können in der Praxis jedoch beliebig kompliziert sein, ohne daß sich die unten beschriebene Prozedur ändert.

Fig. 2 zeigt ein Zeitschema für die automatische Ermittlung des Laufzeitausgleichs.

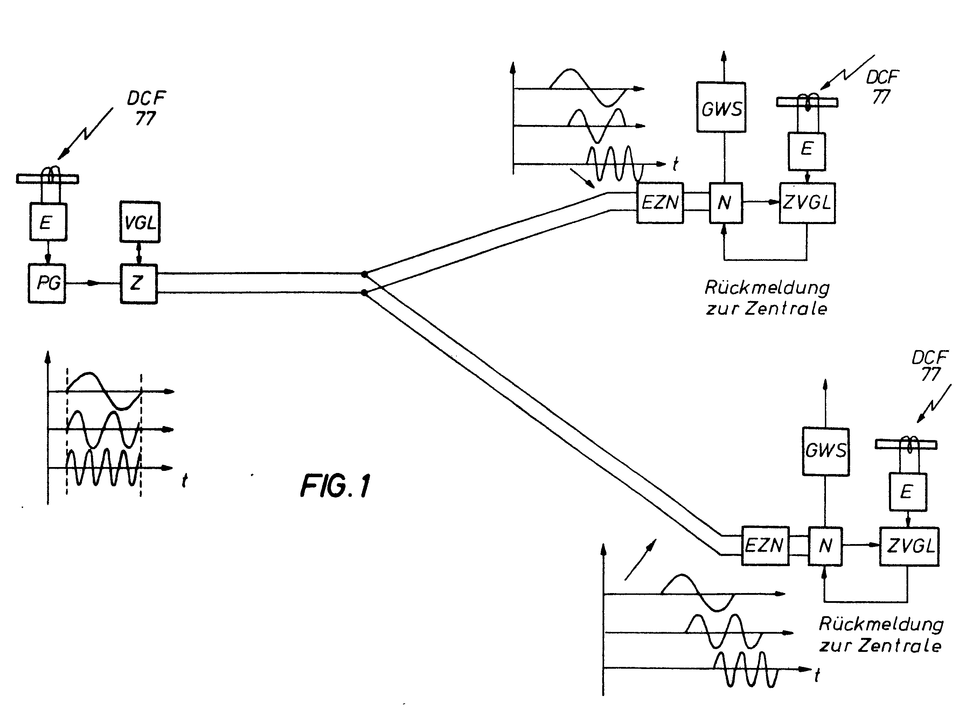

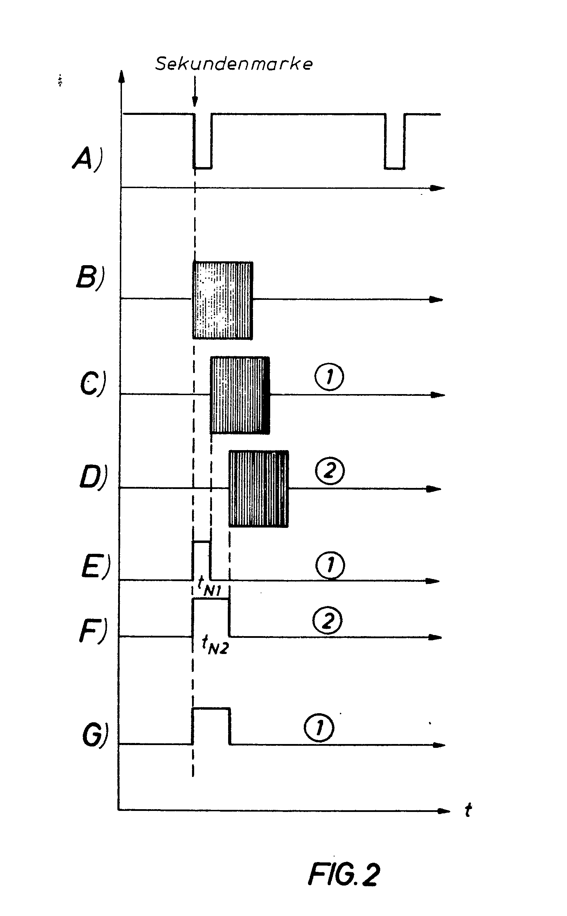

Die Zentrale Z und die Nebenstellen N empfangen mit den Empfängern E ein Zeitzeichensignal, in der Bundesrepublik Deutschland z. B. vom Sender CDF77 auf 77,5 kHz, welcher von der Physikalisch-Technischen-Bundesanstalt betrieben wird. Dieser sendet Signale mit Sekundenmarken aus, Fig. 2A. Nach dem Anwählen einer Verbindungsleitung zu den Nebenstellen N durch die Zentrale Z steuert die in der Zentrale Z empfangene Zeitsignalimpulsfolge einen Schwingungspaketgeber PG, welcher z. B. nacheinander zu den Zeitsignalimpulsen synchrone Schwingungspakete mit verschiedenen Frequenzen, Fig. 2B, auf die Leitung speist. Die Frequenzen können z. B. 400 Hz, 1 kHz und 2,5 kHz betragen. Die Schwingungspakete sind schematisch in einer Zeitskala in Fig. 1 neben die Zentrale Z gezeichnet.

Die Schwingungspakete gelangen nach unterschiedlichen Laufzeiten, Fig. 2C und 2D, in den Nebenstellen N an. In Fig. 1 ist dieser Sachverhalt ebenfalls schematisch neben den Nebenstellen N eingezeichnet. Die verschiedenen Frequenzen erleiden zusätzlich zur absoluten Laufzeit noch unterschiedliche Verzögerungen.

In den Nebenstellen N werden nun die Schwingungspakete mit der Sekundenmarke des Zeitsignals in der Zeitvergleichseinrichtung ZVGL verglichen und die absolute Laufzeit und die Gruppenlaufzeit ermittelt.

Jede Nebenstelle N meldet ihre Laufzeit $t_{N1}$,

$T_{N2}$ usw., z. B. in codierter Form, an die Zentrale Z, Fig. 2E und 2F. Die Meldung enthält auch die Adresse der Nebenstelle. In der Zentrale wird in der Vergleichseinrichtung VGL die längste im Sendernetz vorkommende Laufzeit $t_{max}$ ermittelt sowie die in den einzelnen Nebenstellen N einzustellenden Verzögerungszeiten $t_{V1,2}$... Diese ergeben sich zu $t_{V1,2}... = t_{max} - t_{N1,2}...$.

Die Zentrale meldet die einzustellenden Verzögerungszeiten an die Nebenstellen, welche das jeweilige Laufzeitkorrekturnetzwerk EZN einstellen. Die Laufzeit ist nun zu allen Nebenstellen gleich lang. Fig. 2g zeigt die gegenüber Fig. 2E korrigierte Laufzeit in der ersten Nebenstelle.

Die Korrekturnetzwerke können z. B. aus bekannten komplexen Vielpolnetzwerken bestehen, die jedoch elektronisch variierbar sein müssen. Wenn die Schwingungspakete in Frequenz und Amplitude definiert sind, können in den Nebenstellen auch die Leitungsdämpfung und der Frequenzgang der Leitung gemessen und mit dem Korrekturnetzwerk EZN korrigiert werden.

Beim bis hier beschriebenen Verfahren sind Laufzeitunterschiede vom Zeitzeichensender zu den einzelnen Stellen des Gleichwellennetzes vernachlässigt worden. Dies ist in der Regel zulässig. Sollten diese Laufzeitunterschiede jedoch zu groß werden, so sind sie in den Nebenstellen leicht zu berücksichtigen durch eine fest eingebaute Korrektur, da sich der Standort der Nebenstellen ja nicht ändert.

## Patentansprüche

1. Verfahren zum zeitgleichen Aussenden von Nachrichten, welche von einer Zentrale (Z) über Leitungen mit unterschiedlichen Laufzeiten ausgehen, durch mehrere Gleichwellensender in Nebenstellen (N), wobei die Zentrale zur Ermittlung der Laufzeiten Schwingungspakete an die Nebenstellen sendet und die ermittelten Laufzeiten in der Zentrale miteinander verglichen werden, dadurch gekennzeichnet, daß die Zentrale und die Nebenstellen ein Zeitsignal eines Zeitzeichensenders empfangen, daß die Zentrale nach dem Anwählen einer Leitung die Schwingungspakete synchron zum Zeitsignal auf die Leitung speist, daß die Nebenstellen die empfangenen Schwingungspakete mit dem Zeitsignal vergleichen und das Vergleichsergebnis an die Zentrale zurückmelden, und daß die Zentrale daraufhin den Nebenstellen die einzustellenden Verzögerungszeiten für den Laufzeitausgleich mitteilt.

2. Verfahren nach Anspruch 1, dadurch gekennzeichnet, daß die Schwingungspakete von verschiedenen Frequenzen sind und nacheinander auf die Leitung gespeist werden und daß die Verzögerungszeiten in den Nebenstellen frequenzabhängig eingestellt werden.

3. Verfahren nach Anspruch 2, dadurch gekennzeichnet, daß die Schwingungspakete definierte Amplituden aufweisen und daß in den Nebenstellen auch die Leitungsdämpfung und der Frequenzgang der Leitung gemessen und korrigiert werden.

4. Verfahren nach einem der Ansprüche 1 bis 3, dadurch gekennzeichnet, daß die Nebenstellen das Vergleichsergebnis codiert in einem Telegramm zurückmelden.

5. Verfahren nach Anspruch 4, dadurch gekennzeichnet, daß das Telegramm die Adresse der jeweiligen Nebenstelle enthält.

6. Anordnung zur Durchführung des Verfahrens nach einem der vorhergehenden Ansprüche, bei welcher die Zentrale (Z) einen Schwingungspaketgeber (PG) und eine Vergleichseinrichtung (VGL) zur Berechnung der einzustellenden Verzögerungszeiten aufweist, dadurch gekennzeichnet, daß die Zentrale (Z) ferner einen Empfänger (E) für den Empfang eines Zeitzeichensenders aufweist, daß der Schwingungspaketgeber (PG) damit synchronisiert ist und daß die Nebenstellen (N) einen Empfänger (E) zum Empfang eines Zeitzeichensenders, eine Zeitvergleichseinrichtung (ZVGL) zum Vergleich der über die Leitung empfangenen Schwingungspakete mit dem Zeitsignal und ferner ein einstellbares Laufzeitkorrektur- und Entzerrernetzwerk (EZN) aufweisen.

## Claims

1. Method for the simultaneous transmission of communications, which emanate from a master station (Z) by way of lines with different transit times, by several common frequency transmitters in slave stations (N), wherein the master station transmits bursts of oscillation to the slave stations for the determination of the transit times and the determined transit times are compared one with the other in the master station, characterized thereby, that the master station and the slave stations receive a time signal of a time signal transmitter, that the master station after the selection of a line feeds the bursts of oscillation onto that line synchronously with the time signal, that the slave stations compare the received bursts of oscillation with the time signal and signal the result of the comparison back to the master station, and that the master station thereupon communicates the delay times to be set for the transit time equalisation to the slave stations.

2. Method according to claim 1, characterized thereby, that the bursts of oscillation are of different frequencies and fed onto the line one after the other and that the delay times are set in the slave stations in dependence on frequency.

3. Method according to claim 2, characterized thereby, that the bursts of oscillation display defined amplitudes and that also the line attenuation and the frequency response characteristic of the line are measured and corrected in the slave stations.

4. Method according to one of the claims 1 to 4, characterized thereby, that the slave stations signal the result of the comparison back coded in a telegram.

5. Method according to claim 4, characterized thereby, that the telegram contains the address of the respective slave station.

6. Arrangement for the performance of the method according to one of the preceding claims, in which the master station (Z) displays a generator (PG) of bursts of oscillations and a comparison equipment (VGL) for the calculation of the delay times to be set, characterized thereby, that the master station (Z) furthermore displays a receiver (E) for the reception of a time signal transmitter, that the generator (PG) of bursts of oscillations is synchronised thereby and that the slave stations (N) display a receiver (E) for the reception of a time signal transmitter, a time comparison equipment (ZVGL) for the comparison of the bursts of oscillation received over the line with the time signal and, furthermore, a settable transit time correction and distortion-correcting network (EZN).

## Revendications

1. Procédé de transmission isochrone, par plusieurs émetteurs d'ondes communes situés dans autant de postes secondaires (N), d'informations reçues d'un poste principal (Z) par l'intermédiaire de lignes présentant des temps de propagation inégaux, consistant à faire envoyer par le poste principal aux postes secondaires des trains d'oscillations destinés à déterminer les temps de propagation, pour comparer ensuite ces derniers entre eux au poste principal, et caractérisé par le fait:

— que le poste principal et les postes secondaires reçoivent un top en provenance d'un émetteur de signaux horaires;
— que le poste principal sélectionne une ligne sur laquelle il transmet ensuite les trains d'oscillations en synchronisme avec le top;
— que les postes secondaires comparent les trains d'oscillations ainsi reçus avec le top et renvoient au poste principal le résultat de cette comparaison;
— et qu'enfin le poste principal transmet aux postes secondaires les valeurs des temporisations à ménager pour compenser les différences existant entre les temps de propagation.

2. Procédé selon revendication 1, caractérisé par le fait:

— que les trains d'oscillations présentent des fréquences différentes et sont envoyés en ligne les uns après les autres;
— et qu'aux postes secondaires ce sont ces fréquences qui conditionnent les réglages des temporisations.

3. Procédé selon revendication 2, caractérisé par le fait:

— que les trains d'oscillations présentent des amplitudes définies;
— et qu'aux postes secondaires l'affaiblissement de la ligne et sa réponse en fréquence sont en outre mesurés et corriges.

4. Procédé selon une des revendications 1 à 3, caractérisé par le fait que les postes secondaires renvoient au poste principal le résultat de la comparaison sous la forme d'un télégramme codé.

5. Procédé selon revendication 4, caractérisé par le fait que le télégramme indique l'adresse du poste secondaire émetteur.

6. Dispositif de mise en oeuvre du procédé selon une des revendications ci-dessus, dans lequel le poste principal (Z) comprend un générateur de trains d'impulsions (PG) et un circuit comparateur (VGL) destinés au calcul des temporisations nécessaires, et caractérisé par le fait:

— que la poste principal (Z) comprend en outre un récepteur de signaux horaires (E);
— que le générateur de trains d'impulsions (PG) est ainsi rendu synchrone;
— et que les postes secondaires (N) sont équipés d'un récepteur de signaux horaires (E), d'un comparateur chronométrique (ZVGL) mesurant les intervalles de temps entre la réception des trains d'oscillations en provenance de la ligne et le top, et enfin d'un circuit ajustable assurant l'égalisation et la correction de distorsion des temps de propagation (EZN).

FIG.1

FIG.2